# EUROPÄISCHE PATENTSCHRIFT

(11) **EP 1 659 292 B1**
(45) Veröffentlichungstag und Bekanntmachung des Hinweises auf die Patenterteilung: **26.08.2015**
(21) Anmeldenummer: 05021923.7
(22) Anmeldetag: 07.10.2005
(51) Int. Cl.: F04D 27/02, F04D 25/04

(54) **Abgasturbolader**
Turbocharger
Turbocompresseur

(30) Priorität: 20.11.2004 DE 102004056185
(43) Veröffentlichungstag der Anmeldung: 24.05.2006
(73) Patentinhaber: Bayerische Motoren Werke Aktiengesellschaft, 80809 München (DE)
(72) Erfinder: Eisterlehner, Leopold, 4594 Steinbach/Steyr (AT); Wimmer, Rudolf, 4431 Haidershofen (AT); Schröcker, Christian, 4400 Steyr (AT)

(56) Entgegenhaltungen:
- DE-A1- 3 727 812
- DE-A1- 10 245 336
- GB-A- 2 077 354
- GB-A- 2 268 228

## Beschreibung

Die Erfindung betrifft einen Abgasturbolader mit den Merkmalen aus dem Oberbegriff des Patentanspruches 1.

Sie geht von der europäischen Patentschrift EP 1 136 676 B1 aus, in der eine Brennkraftmaschine mit einer zweistufigen, schaltbaren Abgasturboladeranordnung offenbart ist. Die Anordnung besteht im Wesentlichen aus einem motorfernen Niederdruck-Abgasturbolader sowie einem motornahen Hochdruck-Abgasturbolader. Weiter weist der Verdichter des Hochdruck-Abgasturboladers einen Verdichter-Bypass auf, dessen durchgesetzte Luftmenge von einem Stellelement geregelt wird. Die Regelung erfolgt mit einem elektronischen Motor-Steuergerät.

GB 2 268 228 offenbart eine gleichartige einstufige Abgasturbolader anordnung.

Auch wenn die beschriebene Anordnung prinzipiell keine Nachteile aufweist, liegt der Erfindung die Aufgabe zugrunde, die Steuerung des Verdichter-Bypasses einfacher darzustellen.

Diese Aufgabe wird von den Merkmalen im kennzeichnenden Teil des Patentanspruchs 1 gelöst.

Durch die erfindungsgemäße Ausgestaltung wird eine selbstgeregelte Steuerung der Luftdurchflussmenge durch den Verdichter-Bypass erzielt. Eine aufwendige elektronische Steuerung mit einem Motorsteuergerät kann somit entfallen.

Durch die erfindungsgemäße Ausgestaltung ist eine Sicherheitsfunktion in das Stellelement integriert, da bei Versagen der Druckmembran oder der Rückstellfeder das Stellelement den Verdichter-Bypass schließt und somit Schäden vermieden sind. Dies gilt auch für die Patentansprüche 2 und 3.

Durch die Ausgestaltung gemäß Patentanspruch 4 kann in vorteilhafter Weise zusätzlich zur druckabhängigen Regelung der Luftdurchflussmenge durch den Bypass eine druckunabhängige geschlossene Ventilstellung dargestellt werden.

Gemäß Patentanspruch 5 wird vor allem eine temperaturunempfindliche Ansteuerung des Stell- und Halteelementes bevorzugt eingesetzt.

Durch die Ausgestaltung gemäß Patentanspruch 6 besteht die Möglichkeit, bei großen Luftmengendurchsätzen durch den Bypass das druckabhängig selbstregelnde Stellelement aktiv zu schließen. Somit lassen sich Kennfeldbereiche, bei denen durch eine ausschließlich druckabhängige Regelung Wirkungsgradnachteile entstehen würden, gezielt korrigieren. Das Stellelement weist somit einen selbst regelnden Bereich auf, der durch die Abstimmung von Federkraft, Druckverhältnis und Flächenverhältnis bestimmt werden kann und weiter eine gesteuert geschlossene Stellung für einen korrigierenden Eingriff in den weiten Regelbereich des Abgasturboladers.

Im Folgenden ist die Erfindung anhand zweier bevorzugter Ausführungsbeispiele in vier Figuren näher erläutert.
- Figur 1: zeigt einen erfindungsgemäßen Abgasturbolader im Schnitt bei in etwa gleichen Druckverhältnissen in einem Druckraum und in einem Saugraum;
- Figur 2: zeigt den Abgasturbolader im Schnitt bei höherem Druck im Druckraum als im Saugraum;
- Figur 3: zeigt den Abgasturbolader im Schnitt bei wesentlich höherem Druck im Druckraum als im Saugraum;
- Figur 4: zeigt einen erfindungsgemäßen Abgasturbolader mit einem Stellelement und mit einem Stell- und Halteelement.

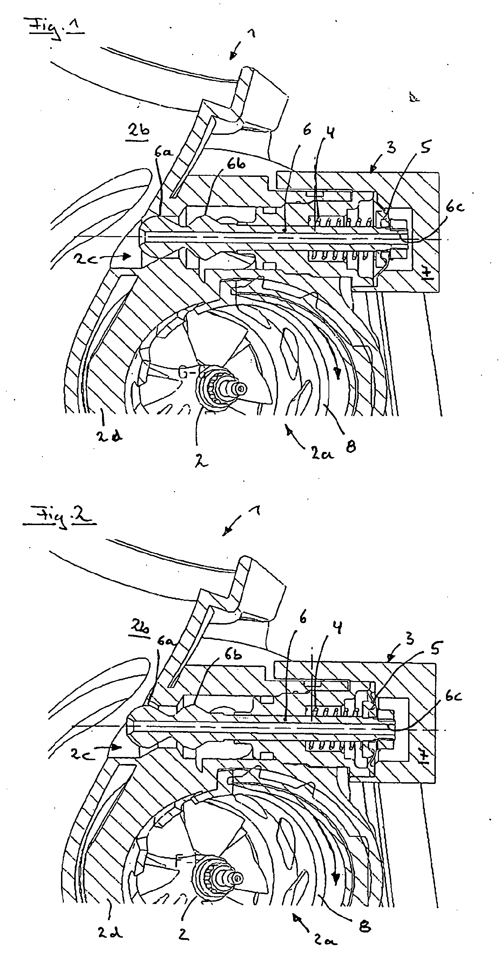

Die Figuren 1 - 4 zeigen jeweils einen Schnitt durch einen erfindungsgemäßen Abgasturbolader 1. Dargestellt ist der Bereich, in dem ein Verdichter 2 angeordnet ist. Der Verdichter 2 ist drehbar in einem Verdichtergehäuse 2d gelagert. Der Verdichter 2 fördert Ansaugluft aus einem Saugraum 2a in einen Druckraum 2b, von wo aus die Ansaugluft weiter zu den Zylindern einer nicht dargestellten Brennkraftmaschine gefördert wird. Der Saugraum 2a und der Druckraum 2b sind über einen Bypass 2c gasführend miteinander verbunden. Im Saugraum 2a ist mit einem Pfeil dargestellt, wie die rückgeführte Luft durch den Bypass 2c in den Saugraum 2a eintritt. Ein Stellelement 3 steuert die Luftmenge, die durch den Bypass 2c gefördert wird.

Erfindungsgemäß ist das Stellelement 3 von einer Druckdifferenz zwischen dem Saugraum 2a und dem Druckraum 2b gesteuert. Das Stellelement 3 besteht im Wesentlichen aus einem im Verdichtergehäuse 2d axial schiebebeweglich angeordneten Kolben 6, mit einer axialen Bohrung 6c sowie einem ersten Anschlag 6a und einem zweiten Anschlag 6b. Die Anschläge 6a, 6b sind am Übergang vom Druckraum 2b zum Bypass 2c angeordnet und verschließen den Bypass 2c gegenüber dem Verdichtergehäuse 2d. An dem, den Anschlägen 6a, 6b abgewandten Ende des Kolbens 6 ist die Bohrung 6c gegenüber einem Umgebungsdruck durch einen Druckdeckel 7 hermetisch abgeriegelt. Radial innen am Druckdeckel 7 sowie radial außen am Kolben 6 sind der Druckdeckel 7 sowie der Kolben 6 über eine radial umlaufende Druckmembran 5 fest miteinander verbunden. Der Druckdeckel 7 und die Druckmembran 5 bilden ein Volumen, in dem der gleiche Luftdruck vorherrscht wie im Druckraum 2b. Auf der, dem Volumen abgewandten Seite der Druckmembran 5 ist eine Rückstellfeder 4 angeordnet, die den Kolben 6 mit ihrer Federkraft entgegen dem im Volumen herrschenden Luftdruck, bzw. dem im Druckraum 2b anliegenden Druck, axial verschiebt.

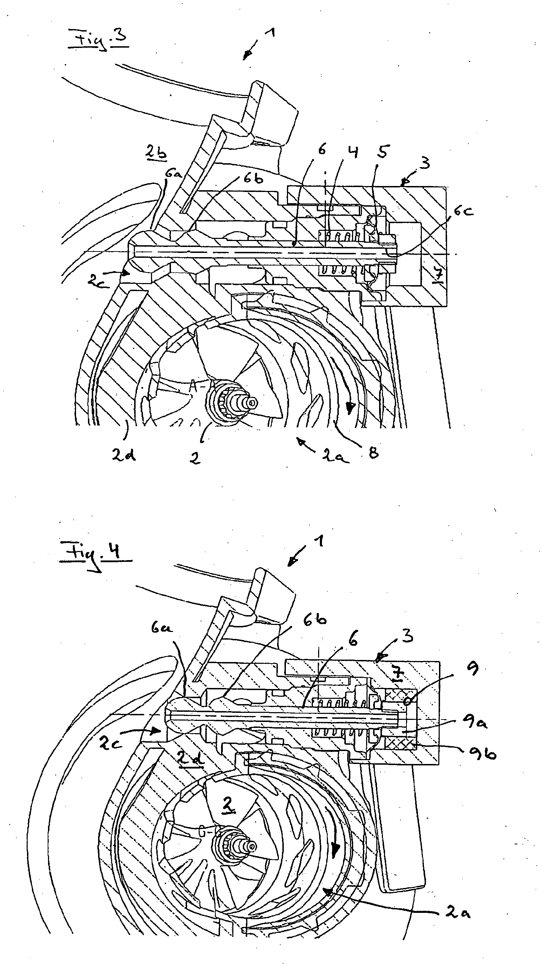

Liegt im Druckraum 2 b gegenüber dem Saugraum 2a der gleiche oder nur ein geringer Überdruck an, so drückt die Federkraft der Rückstellfeder 4 den Kolben 6 in Richtung des Druckdeckels 7, bis der erste Anschlag 6a den Bypass 2c gegenüber dem Saugraum 2a verschließt. Dies ist Figur 1 dargestellt. Steigt der Druck im Druckraum 2b weiter an, so drückt dieser den Kolben 6 entgegen der Federkraft der Rückstellfeder 4 in Richtung Druckraum 2b. Dies ist in Figur 2 dargestellt. Sobald der Druck im Druckraum 2b die Federkraft der Rückstellfeder 4 überschreitet, ist der Bypass 2c geöffnet, Saugraum 2a und Druckraum 2b sind gasführend miteinander verbunden, und Ansaugluft wird aus dem Druckraum 2b in den Saugraum 2a rückgeführt. Steigt der Druck im Druckraum 2b noch weiter an, so verschiebt der an der Druckmembran 5 anliegende Luftdruck den Kolben 6 so weit in Richtung Druckraum 2b, bis der Bypass 2c von dem zweiten Anschlag 6b verschlossen ist, dargestellt in Figur 3.

Eine weitere, bevorzugte Ausführungsform ist in Fig. 4 dargestellt, für die die gleichen Bezugszeichen aus den Fig. 1 bis 3 für die gleichen Bauteile gelten. Fig. 4 unterscheidet sich von den Fig. 1 bis 3 durch ein zusätzliches Stell-und Halteelement 9 unter dem Druckdeckel 7. Das Stell- und Halteelement ist im vorliegenden Ausführungsbeispiel elektromagnetisch und besteht im Wesentlichen aus einem, an dem Kolben 6 angeordneten Anker 9a und einem in den Hohlraum des Druckdeckels 7 integrierten Elektromagneten 9b.

Bei einer Bestromung des Elektromagneten 9b zieht dieser den Anker 9a in Richtung des Druckdeckels 7, bis der Anschlag 6a den Bypass 2c verschließt. Durch dieses zusätzliche Stell- und Halteelement 9 besteht die Möglichkeit, bei großen Luftmengendurchsätzen durch den Bypass 2c das druckabhängig selbstregelnde Stellelement 3 aktiv zu schließen. Somit lassen sich Kennfeldbereiche des Abgasturboladers 1, bei denen durch eine ausschließlich druckabhängige Regelung Wirkungsgradnachteile entstehen würden, gezielt korrigieren. Das Stellelement 3 weist somit einen selbst regelnden Bereich auf, der durch die Abstimmung von Federkraft, Druckverhältnis und Flächenverhältnis bestimmt werden kann und weiter eine gesteuert geschlossene Stellung für einen korrigierenden Eingriff in den weiten Regelbereich des Abgasturboladers.

In weiteren Ausführungsbeispielen kann das Stell- und Halteelement 9 statt elektromagnetisch auch elektromechanisch oder pneumatisch betrieben werden.

Durch die erfindungsgemäße Ausgestaltung wird eine aufwändige Steuerung vermieden. Durch die spezielle Form des Kolbens 6, sowie des ersten und des zweiten Anschlages 6a, 6b kann eine geöffnete Ventilstellung nur im mittleren Ladedruckbereich erreicht werden. Der Öffnungsbereich kann durch Variation der Flächenverhältnisse an denen der Luftdruck wirksam anliegt und der Federkraft festgelegt werden. Weiter beinhaltet diese neuartige, erfindungsgemäße Ausführung der selbst regelnden Durchflussregelung durch den Bypass 2c des Abgasturboladers 1 auch eine Sicherheitsfunktion bei einem Versagen der Druckmembran 5 sowie der Rückstellfeder 4. Im Falle eines Defektes kommt es somit immer zu einem Verschließen des Bypasses 2c.

Ferner werden bei einer Ausführung gem. Fig. 4 folgende Vorteile erzielt:
- Es ist eine genauere Bestimmung des Regelbereichs durch die Ansteuerung einer geschlossenen Stellelementstellung möglich.
- Es ist eine einfache und kostengünstige Realisierung der zusätzlichen Steuerfunktion durch Integration des Ankers 9a in den Kolben 6 möglich.

Wird, wie in den Figuren 1 - 4 dargestellt, in den Saugraum 2a zusätzlich ein Drallelement 8 angeordnet, und der Bypass 2c spiralförmig im Verdichtergehäuse 2d integriert, so ergeben sich noch folgende weitere Vorteile:
- Bei kleinen Massendurchsätzen des Abgasturboladers kann aufgrund der Kombination aller genannten Ausgestaltungsmerkmale das volle Potenzial einer variablen Turbinengeometrie zur Ladedrucksteigerung genutzt werden.
- Durch die kompakte Konstruktion des Bypass 2c ist es möglich, die kinetische Energie des Bypass-Luftstroms zur Vordrallerzeugung des Hauptansaugluftstroms zu verwenden. Dadurch entsteht ein wesentlich günstigerer Gesamtwirkungsgrad von Bypass 2c und Vordrallerzeugung gegenüber allen bisher aus dem Stand der Technik bekannten Lösungen.
- Die Vordrallerzeugung mittels Bypassluftstrom hat zur Folge, dass kein Vorleitapparat (= Strömungswiderstand) im Hauptstromansaugkanal, d.h. im Saugraum 2a, benötigt wird. Zudem befinden sich keine beweglichen Teile im Ansaugkanal des Abgasturboladers 1, was das Risiko für Beschädigungen erheblich verkleinert.
- Die Bypassluftstromeinleitung nahe des Verdichters 2 erschwert zusätzlich eine Verschmutzung eines Heißfilmluftmassenmessers durch Bypassluftstromkondensat, da ein maximaler großer Abstand zwischen Bypassluftstromeinleitung und Heißfilmluftmassenmesser gewährleistet ist. Ferner ist der Bypassluftstromgasaufstieg in Richtung des Heißfilmluftmassenmessers nach einem Abstellen des Motors aufgrund einer Kaminwirkung ebenfalls reduziert, da die Einleitstelle des Bypassluftstroms an der höchsten Stelle des Verdichters stattfindet.
- Die schneckenförmige Einleitung des Bypassluftstroms in den Hauptansaugstrom ermöglicht eine gezielte Vordrallerzeugung in den äußeren Randzonen des Ansaugluftstroms. Durch die hohen Umfangsgeschwindigkeiten an den Verdichterradaußenkanten ergibt sich so eine maximale effiziente Vordrallerzeugung zur Vermeidung von Strömungsabrissen an den Verdichterschaufeln.

### Bezugszeichenliste

- 1: Abgasturbolader
- 2: Verdichter
- 2a: Saugraum
- 2b: Druckraum
- 2c: Bypass
- 2d: Verdichtergehäuse
- 3: Stellelemement
- 4: Rückstellfeder
- 5: Druckmembran
- 6: Kolben
- 6a: erster Anschlag
- 6b: zweiter Anschlag
- 6c: Bohrung
- 7: Druckdeckel
- 8: Drallelement
- 9: Stell- und Halteelement
- 9a: Anker
- 9b: Elektromagnet

## Patentansprüche

1. Abgasturbolader (1) mit einem Verdichter (2) zur Förderung einer Ansaugluft einer Brennkraftmaschine, wobei ein Saugraum (2a) des Verdichters (2) mit einem Druckraum (2b) des Verdichters (2) gasführend über einen Bypass (2c) verbindbar ist und wobei eine durch den Bypass (2c) geförderte Luftmenge von einem Stellelement (3) einstellbar ist, wobei das Stellelement (3) von einer Druckdifferenz zwischen dem Saugraum (2a) und dem Druckraum (2b) gesteuert ist,
**dadurch gekennzeichnet, dass** das Stellelement (3) ein von im Druckraum (2b) vorherrschenden Druck gegen eine Federkraft einer Rückstellfeder (4), von einer Druckmembran (5) gesteuerter, axial schiebebeweglicher, bolzenförmiger Kolben (6) mit einem ersten (6a) und einem zweiten Anschlag (6b) ist.

2. Abgasturbolader nach Patentanspruch 1,
**dadurch gekennzeichnet, dass** der Bypass (2c) unter einem ersten definierten Druck im Druckraum (2b) von dem ersten Anschlag (6a) aufgrund der Federkraft verschlossen ist.

3. Abgasturbolader nach Patentanspruch 1 oder 2,
**dadurch gekennzeichnet, dass** der Bypass (2c) über einem zweiten definierten Druck im Druckraum (2c) von dem zweiten Anschlag (6b) aufgrund des zweiten Drucks verschlossen ist.

4. Abgasturbolader nach einem der Patentansprüche 1 bis 3,
**dadurch gekennzeichnet, dass** an das Stellelement (3) ein Stell- und Halteelement (9) angeordnet ist.

5. Abgasturbolader nach Patentanspruch 4,
**dadurch gekennzeichnet, dass** das Stell- und Halteelement (9) elektromagnetisch oder elektromechanisch oder pneumatisch betreibbar ist.

6. Abgasturbolader nach Patentanspruch 4 oder 5,
**dadurch gekennzeichnet, dass** der Bypass (2c) bei aktivem Stell- und Halteelement (9) verschlossen ist.

## Claims

1. An exhaust turbocharger (1) with a compressor (2) for conveying intake air for an internal combustion engine, wherein a suction chamber (2a) of the compressor (2) can be connected to a pressure chamber (2b) of the compressor (2) to guide gas via a bypass (2c) and wherein an air quantity conveyed by the bypass (2c) can be adjusted by an adjusting element (3), wherein the adjusting element (3) is controlled by a pressure difference between the suction chamber (2a) and the pressure chamber (2b),
**characterised in that** the adjusting element (3) is a bolt-shaped piston (6), which is axially slideably movable, controlled by a pressure membrane (5), by pressure prevailing in the pressure chamber (2b) against a spring force of a return spring (4), with a first (6a) and a second stop (6b).

2. An exhaust turbocharger according to claim 1,
**characterised in that** the bypass (2c) is closed under a first defined pressure in the pressure chamber (2b) by the first stop (6a) because of the spring force.

3. An exhaust turbocharger according to claim 1 or claim 2,
**characterised in that** the bypass (2c) is closed over a second defined pressure in the pressure chamber (2c) by the second stop (6b) because of the second pressure.

4. An exhaust turbocharger according to any one of claims 1 to 3,
**characterised in that** an adjusting and holding element (9) is arranged on the adjusting element (3).

5. An exhaust turbocharger according to claim 4,
**characterised in that** the adjusting and holding element (9) can be operated electromagnetically or electromechanically or pneumatically.

6. An exhaust turbocharger according to claim 4 or claim 5,
**characterised in that** the bypass (2c) is closed when the adjusting and holding element (9) is active.

## Revendications

1. Turbocompresseur de gaz d'échappement (1) comprenant un compresseur (2) permettant de refouler l'air aspiré vers un moteur à combustion interne, une chambre d'aspiration (2a) du compresseur (2) pouvant être reliée à une chambre de pression (2b) de ce compresseur (2) de façon à transférer les gaz par une conduite de dérivation (2c), et la quantité d'air refoulée par la conduite de dérivation (2c) pouvant être réglée par un élément de réglage (3), cet élément de réglage (3) étant commandé par la différence de pression entre la chambre d'aspiration (2a) et la chambre de pression (2b),
**caractérisé en ce que**
l'élément de réglage (3) est constitué par un piston en forme de tige (6) coulissant axialement commandé par une membrane de pression (5) par la pression régnant dans la chambre de pression (2b) contre la force élastique d'un ressort de rappel (4) et comportant une première butée (6a) et une seconde butée (6b).

2. Turbocompresseur de gaz d'échappement conforme à la revendication 1,
**caractérisé en ce que**
la conduite de dérivation (2c) est fermée par la première butée (6a) en raison de la force élastique lorsque la pression dans la chambre de pression (2b) est inférieure à une première pression définie.

3. Turbocompresseur de gaz d'échappement conforme à la revendication 1 ou 2,
**caractérisé en ce que**
la conduite de dérivation (2c) est fermée par la seconde butée (6b) en raison d'une seconde pression lorsque la pression dans la chambre de pression (2c) est supérieure à cette seconde pression.

4. Turbocompresseur de gaz d'échappement conforme à l'une des revendications 1 à 3,
**caractérisé en ce qu'**
un élément de réglage et de retenue (9) est monté sur l'élément de réglage (3).

5. Turbocompresseur de gaz d'échappement conforme à la revendication 4,
**caractérisé en ce que**
l'élément de réglage et de retenue (9) est à actionnement électromagnétique ou électromécanique ou pneumatique.

6. Turbocompresseur de gaz d'échappement conforme à la revendication 4 ou 5,
**caractérisé en ce que**
la conduite de dérivation (2c) est fermée lorsque l'élément de réglage et de retenue (9) est actif.
